(19) Europäisches Patentamt
European Patent Office
Office européen des brevets

(11) **EP 3 862 878 A1**

(12) **EUROPEAN PATENT APPLICATION**

(43) Date of publication:
**11.08.2021 Bulletin 2021/32**

(51) Int Cl.:
***G06F 9/455*** (2018.01)

(21) Application number: **21153147.0**

(22) Date of filing: **25.01.2021**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **04.02.2020 JP 2020017283**<br><br>(71) Applicant: **TOYOTA JIDOSHA KABUSHIKI KAISHA**<br>**Toyota-shi, Aichi-ken, 471-8571 (JP)** | (72) Inventors:<br>• **ONDA, Yusuke**<br>  **Aichi-ken, 471-8571 (JP)**<br>• **YAMAMOTO, Takeshi**<br>  **Chiyoda-ku, Tokyo 101-0022 (JP)**<br><br>(74) Representative: **J A Kemp LLP**<br>**14 South Square**<br>**Gray's Inn**<br>**London WC1R 5JJ (GB)** |

(54) **VEHICLE CONTROL DEVICE, VEHICLE CONTROL METHOD AND STORAGE MEDIUM STORING VEHICLE CONTROL PROGRAM**

(57) A vehicle control device acquires a state of the vehicle. Based on the state of the vehicle, the vehicle control device changes processor assignment for a target virtual machine running on a first processor to cause the target virtual machine to run on a second processor. The vehicle control device stops the first processor for which assignment has been changed.

FIG.1

EP 3 862 878 A1

**Description**

BACKGROUND

Technical Field

The present disclosure relates to a vehicle control device, a vehicle control method, and a non-transitory storage medium storing a vehicle control program.

Related Art

Japanese Patent Application Laid-Open (JP-A) No. 2019-057162 discloses a virtualization system capable of reducing delay in communication between a virtual computer and hardware. The virtualization system runs VM cores 11a-11c as ECUs providing functions related to vehicle travel control such as traveling, turning, and stopping. JP-ANo. 2019-057162 discloses that the VM core 11a may be run as an ECU providing multimedia functions such as a navigation device and an audio device. JP-A No. 2019-057162 also discloses that the VM core 11a may be run as an ECU for body systems including seats and power windows.

International Publication (WO) No. 2011/119444 discloses a system that migrates a virtual machine from one computer to another of multiple computers when the one computer is determined to be over-consuming power.

When multiple virtual machines are run on multiple processors, a question arises as to which of the processors is an appropriate one to be assigned each virtual machine.

The virtual machine system disclosed in JP-A No. 2019-057162 is unable to dynamically change processor assignment for virtual machines.

In the system disclosed in WO No. 2011/119444, only power consumption is taken into account in migrating a virtual machine from one computer to another. Thus, the system is unable to appropriately take into account a state of the vehicle when, for example, assigning a virtual machine running on one processor of an electronic control unit (ECU) installed in the vehicle to another processor thereof.

Hence, the technique in the related art is unable to reduce power consumption while taking into account a state of the vehicle when running multiple virtual machines on multiple processors installed in the vehicle.

SUMMARY

In view of the above circumstances, the present disclosure aims to provide a vehicle control device, a vehicle control method, and a non-transitory storage medium storing an information processing program capable of reducing power consumption while taking into account a state of the vehicle when running multiple virtual machines on multiple processors installed in the vehicle.

A first aspect of the present disclosure is a vehicle control device including plural processors configured to run plural virtual machines configured to control a vehicle. The vehicle control device includes: an acquisition section configured to acquire a state of the vehicle; a changing section configured to change, based on the state of the vehicle acquired by the acquisition section, processor assignment for a target virtual machine running on a first processor to cause the target virtual machine to run on a second processor; and a termination section configured to stop the first processor whose assignment has been changed by the changing section.

The vehicle control device of the first aspect changes, based on a state of the vehicle, processor assignment for a target virtual machine running on a first processor to cause the target virtual machine to run on a second processor. The first processor whose assignment has been changed is stopped. This reduces power consumption while taking into account a state of the vehicle when running multiple virtual machines on multiple processors installed in the vehicle.

In a second aspect of the present disclosure, the vehicle control device further includes an identification section configured to identify the target virtual machine whose assignment is to be changed from the first processor to the second processor, based on the state of the vehicle acquired by the acquisition section. The changing section is configured to change processor assignment for the target virtual machine identified by the identification section. This allows for appropriately identifying the target virtual machine according to a state of the vehicle and allows for stopping the first processor on which the target virtual machine has been running.

In a third aspect of the present disclosure, the identification section of the vehicle control device is configured to identify the target virtual machine based on the state of the vehicle acquired by the acquisition section and operating state information, the operating state information including a predetermined correspondence between a state of the vehicle and an operating state of a virtual machine. This allows for appropriately changing processor assignment according to an operating state of the target virtual machine.

In a forth aspect of the present disclosure, the operating state of the virtual machine includes plural operating states each involving a different processor utilization rate. This allows for assigning each virtual machine to each processor according to a processor utilization rate.

In a fifth aspect of the present disclosure, the identification section of the vehicle control device is configured to identify, as the target virtual machine, a virtual machine in a specific operating state of the plural operating states. This allows for appropriately assigning a virtual machine in a specific operating state to a processor.

In a sixth aspect of the present disclosure, the vehicle control device further includes a selection section configured to select the second processor based on the state of the vehicle acquired by the acquisition section. This allows for appropriately selecting the second processor according to a state of the vehicle.

In a seventh aspect of the present disclosure, the changing section of the vehicle control device is configured to determine whether it is possible to run the target virtual machine on the second processor selected by the selection section, and when it is possible to run the target virtual machine on the second processor, the changing section is configured to change processor assignment for the target virtual machine to cause the target virtual machine to run on the second processor. This allows the target virtual machine to be assigned to an appropriate processor according to the determination as to whether the target virtual machine can be run on that processor.

In an eighth aspect of the present disclosure, the selection section of the vehicle control device is configured to select, as the second processor, a processor on which a virtual machine in a predetermined operating state is already running. This allows another virtual machine to be consolidated in the processor on which a virtual machine is already running.

In a ninth aspect of the present disclosure, each of the plural virtual machines has a predesignated processor to run on while in the predetermined operating state.

In a tenth aspect of the present disclosure, the selection section of the vehicle control device is configured to select, as the second processor, a processor that is different from a processor configured to execute external communication processing or interrupt processing. This allows for changing processor assignment while reducing impact on the processor for executing external communication processing or interrupt processing.

In an eleventh aspect of the present disclosure, each of the plural virtual machines has a maximum allowable calculation period and minimum allowable calculation time that are predetermined for each operating state, the maximum allowable calculation period representing a maximum calculation period that is allowed for by each virtual machine, the minimum allowable calculation time representing minimum calculation time that is allowed for by each virtual machine. The changing section is configured to determine whether it is possible to run the target virtual machine on the second processor selected by the selection section, according to at least one of the maximum allowable calculation period and the minimum allowable calculation time corresponding to an operating state of the target virtual machine, and when it is possible to run the target virtual machine on the second processor, the changing section is configured to change processor assignment for the target virtual machine to cause the target virtual machine to run on the second processor. This allows for changing processor assignment by taking into account the maximum allowable calculation period and the minimum allowable calculation time of each virtual machine.

In a twelfth aspect of the present disclosure, the state of the vehicle is determined based on at least one of presence/absence of an occupant, charging of the vehicle, an ignition position, a shift position, and a driving mode. This allows for changing processor assignment for virtual machines by taking into account presence/absence of an occupant, charging of the vehicle, an ignition position, a shift position, and a driving mode.

A thirteenth aspect of the present disclosure is a vehicle control method executed by a computer of a vehicle control device including plural processors configured to run plural virtual machines configured to control a vehicle. The method includes: acquiring a state of the vehicle; based on the acquired state of the vehicle, changing processor assignment for a target virtual machine running on a first processor to cause the target virtual machine to run on a second processor; and stopping the first processor whose assignment has been changed.

A fourteenth aspect of the present disclosure is a non-transitory computer-readable storage medium storing a vehicle control program executable by a computer of a vehicle control device including plural processors configured to run plural virtual machines configured to control a vehicle. The program, when executed by the computer, causes the computer to perform a method including: acquiring a state of the vehicle; based on the acquired state of the vehicle, changing processor assignment for a target virtual machine running on a first processor to cause the target virtual machine to run on a second processor; and stopping the first processor whose assignment has been changed.

According to the above-described aspects of the present disclosure, it is possible to reduce power consumption while taking into account a state of the vehicle when running multiple virtual machines on multiple processors installed in the vehicle.

BRIEF DESCRIPTION OF THE DRAWINGS

Exemplary embodiments of the present disclosure will be described in detail based on the following figures, wherein:

Fig. 1 is a block diagram showing an exemplary hardware configuration of a vehicle control system according to first and second exemplary embodiments;

Fig. 2 is a block diagram showing an exemplary functional configuration of the vehicle control system according to the first and second exemplary embodiments;

Fig. 3 explains assignment of virtual machines to processors;

Fig. 4 shows an example of vehicle state information;

Fig. 5 shows an example of operating state information;

Fig. 6 shows an example of calculation time information;

Fig. 7 explains calculation time and a calculation period;

Fig. 8 shows an example of a table generated from the vehicle state information, the operating state information, and the calculation time information;

Fig. 9 shows an operation example in the exemplary embodiments;

Fig. 10 shows an operation example in the exemplary embodiments;

Fig. 11 shows an example of assignment information;

Fig. 12 shows an example of a vehicle control process executed by the vehicle control system of the first exemplary embodiment;

Fig. 13 shows an example of an assignment determination process executed by the vehicle control system of the first exemplary embodiment;

Fig. 14 shows an example of an assignment determination process executed by the vehicle control system of the second exemplary embodiment; and

Fig. 15 shows an example of modifications.

DETAILED DESCRIPTION

Below a description will be given of a vehicle control system of exemplary embodiments with reference to the drawings.

First Exemplary Embodiment

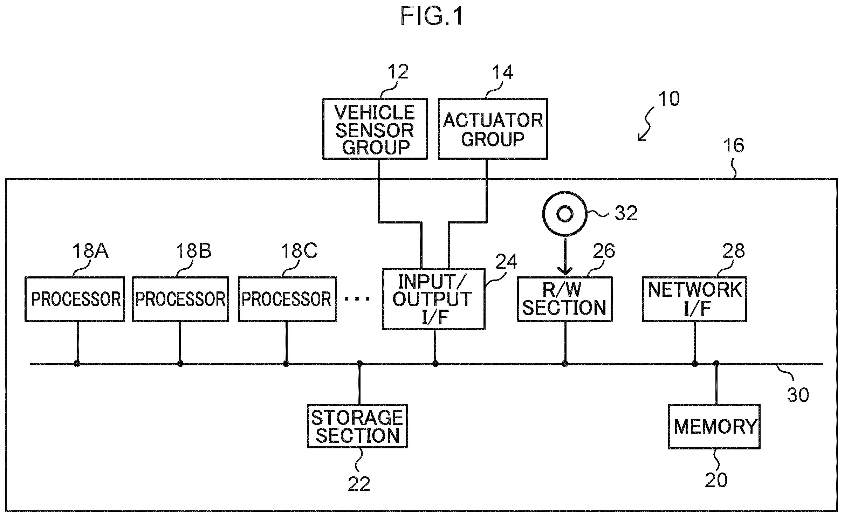

Fig. 1 is a block diagram showing an exemplary hardware configuration of a vehicle control system 10 according to a first exemplary embodiment. As shown in Fig. 1, the vehicle control system 10 according to the first exemplary embodiment includes an onboard sensor group 12, an actuator group 14, and an electronic control unit (ECU) 16 as an example of the vehicle control device. The ECU 16 of the exemplary embodiment is an integrated ECU integrating multiple functions.

In the exemplary embodiment, a description is given using an example in which a vehicle equipped with the vehicle control system 10 is a plug-in hybrid vehicle that can be both charged externally and engine-powered and is also a vehicle that can be driven both automatically and manually. It should be noted that the vehicle control system 10 of the present embodiment may also be used for gasoline-powered vehicles, hybrid vehicles, and electric vehicles.

The ECU 16 includes multiple processors 18A, 18B, 18C, and so on, a memory 20 as a temporary storage area, and a non-volatile storage section 22. The processor is a central processing unit (CPU), for example. The ECU 16 includes an input/output interface (I/F) 24 to which the onboard sensor group 12 and the actuator group 14 as examples of an input/output device are connected, and a read/write (R/W) section 26 that controls reading and writing of data from/to a storage medium 32. The ECU 16 further includes a network I/F 28 connected to a network such as the Internet. The multiple processors 18A, 18B, 18C, the memory 20, the storage section 22, the input/output I/F 24, the R/W section 26, and the network I/F 28 are connected to each other via a bus 30.

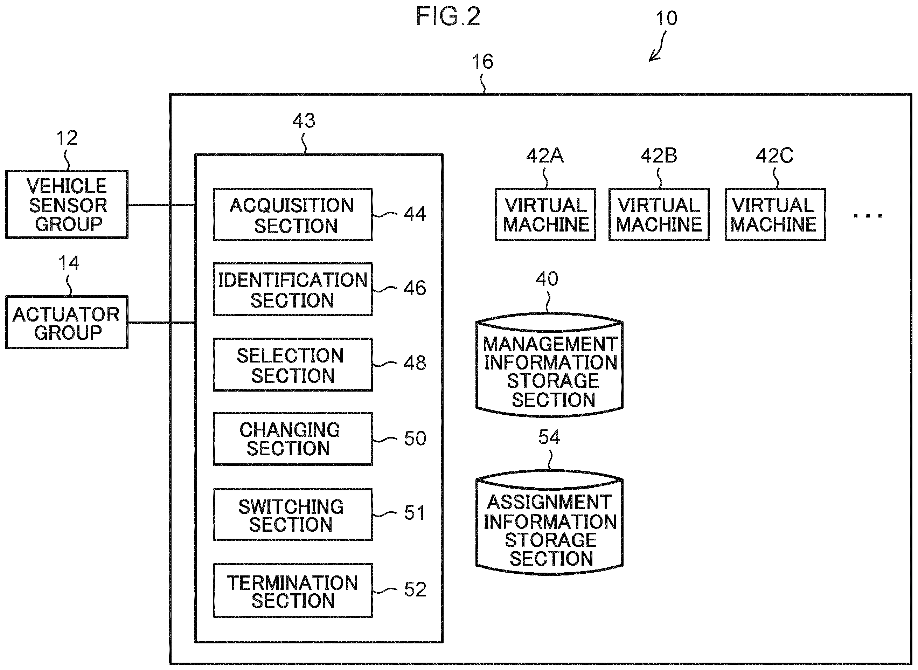

Fig. 2 is a block diagram showing an exemplary functional configuration of the vehicle control system 10 according to the exemplary embodiment. As shown in Fig. 2, the vehicle control system 10 of the exemplary embodiment includes the onboard sensor group 12, the actuator group 14, and the ECU 16.

The onboard sensor group 12 is an aggregate of sensors placed at various locations in the vehicle. For example, the onboard sensor group 12 includes a sensor for detecting whether an occupant is aboard the vehicle, a sensor for detecting whether the vehicle is charged or powered by battery alone, a sensor for detecting whether an ignition position is at ON position or OFF position, a sensor for detecting a shift position, and a sensor for detecting whether a driving mode is an automatic driving mode or a manual driving mode. These sensors may be configured in any way.

The actuator group 14 is an aggregate of actuators placed at various locations in the vehicle. The EUC 16 controls each actuator included in the actuator group 14.

The ECU 16 includes the multiple processors 18A, 18B, 18C, and so on. Hereinafter, these multiple processors 18A, 18B, 18C, and so on are simply referred to as "multiple processors 18". Multiple virtual machines for controlling the vehicle run on these multiple processors 18. As shown in Fig. 2, the ECU 16 includes, as its functional components, a management information storage section 40, a hypervisor 43, and an assignment information storage section 54.

Controlling various components of the vehicle with multiple ECUs has conventionally been known. Functions of these multiple ECUs can be implemented by multiple virtual machines.

Running multiple virtual machines in place of ECUs reduces hardware cost, assembly cost, and the like. In this case, one virtual machine runs in place of an ECU having a particular function.

It is also possible to dynamically assign each of multiple virtual machines to one of multiple processors. In dynamically assigning processors to multiple virtual machines, functional constraints on the virtual machines need to be taken into account. Also, it is necessary to assign a virtual machine to a processor that has a calculation capability required for that virtual machine to run.

For example, assume a case where each of multiple virtual machines is running on one of multiple processors. In this case, multiple virtual machines may be running on a single processor. Each of the multiple virtual machines is responsible for controlling each component of the vehicle. If that single processor is stopped, multiple virtual machines running thereon would be stopped. As each virtual machine is responsible for controlling each component of the vehicle, it depends on a state of the vehicle whether these virtual machines may be stopped or not.

For example, when the vehicle is in a state in which it is traveling in an automatic driving mode, a virtual machine for controlling functions associated with the automatic driving needs to continue running and cannot be consolidated in another processor. On the other hand, when the vehicle is in a state in which it is stopped, the virtual machine for controlling functions associated with the automatic driving may be consolidated in another processor in some cases.

Hence, the vehicle control system 10 of the present embodiment consolidates virtual machines in a particular processor by taking into account a state of the vehicle. And the vehicle control system 10 stops a processor on which virtual machines are no longer running. This reduces power consumption while taking into account a state of the vehicle.

In consolidating target virtual machines in a particular processor to run on, it is necessary to ensure that the target virtual machines properly run on that newly assigned processor. For example, in a case in which a virtual machine completes a process within predetermined calculation time, the virtual machine needs to run on a processer having such a calculation capability. Thus, the vehicle control system of the present embodiment selects a processor to be newly assigned to virtual machines by taking into account whether the virtual machines can properly run on that newly assigned processor. This enables the virtual machines to properly run on the newly assigned processor.

A detailed description follows below.

The hypervisor 43 of the present embodiment runs on any one of the multiple processors 18. The hypervisor 43 and virtual machines 42A, 42B, 42C, and so on are each software that is executed on any one of the multiple processors 18.

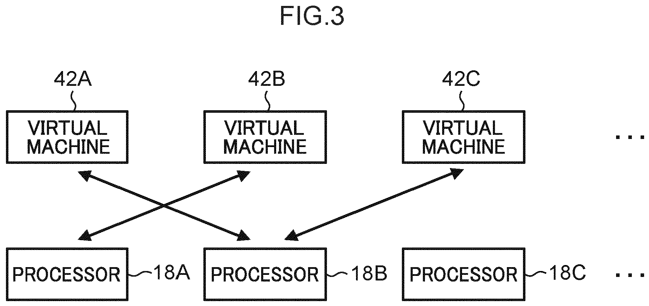

Specifically, the hypervisor 43 executes processing to assign each of the multiple virtual machines 42A, 42B, 42C, and so on running in the ECU 16 to any one of the multiple processors 18, as shown in Fig. 3. Hereinafter, the multiple virtual machines 42A, 42B, 42C, and so on are simply referred to as "multiple virtual machines 42".

The management information storage section 40 stores vehicle state information, operating state information, and calculation time information that are used in executing the processing to assign each of the multiple virtual machines 42 to each processor.

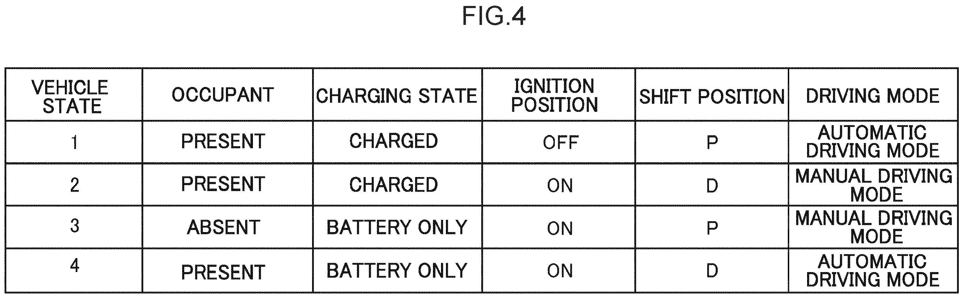

Fig. 4 shows an example of the vehicle state information. In the vehicle state information shown in Fig. 4, a state of the vehicle, boarding information representing whether an occupant is aboard the vehicle or not, charging information representing whether the vehicle is charged or not, an ignition position representing information about available functions of the vehicle, a shift position representing information about driving of the vehicle, and information representing a driving mode of the vehicle are associated with each other. Thus, a state of the vehicle is determined according to the presence/absence of an occupant, charging of the vehicle, the ignition position, the shift position, and the driving mode. The shift position "P" denotes a parking position and the shift position "D" denotes a drive position. It should be noted that the above information (the boarding information, the charging information, etc.) for determining a state of the vehicle are merely exemplary; it may be determined based on one or a combination of kinds of information obtained by the onboard sensors.

For example, when an occupant is aboard the vehicle ("Present" in Fig. 4), the vehicle is charged ("Charged" in Fig. 4), the ignition position is "OFF", the shift position is "P", and the driving mode of the vehicle is "automatic driving", the vehicle has a state "1".

The state "1" of the vehicle represents a situation in which the vehicle is stopped and an occupant is getting in the vehicle. A state "2" of the vehicle represents a situation in which the vehicle is traveling. A state "3" of the vehicle represents a situation in which the vehicle is stopped and an occupant is getting out of the vehicle. A state "4" represents a situation in which the vehicle is traveling in the automatic driving mode. Based on these vehicle states, the hypervisor 43 assigns the virtual machines to the processors.

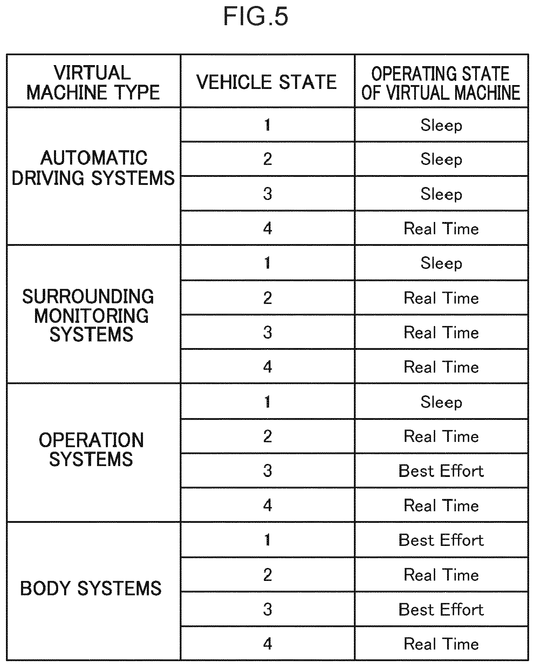

The management information storage section 40 also stores operating state information as shown in Fig. 5. In the operating state information, information representing a type of the virtual machine, the vehicle state, and an operating state of the virtual machine are associated with each other as shown in Fig. 5. In the present embodiment, a description is given using an example in which a virtual machine for automatic driving systems, a virtual machine for surrounding monitoring systems, a virtual machine for operation systems, and a virtual machine for body systems are used. The virtual machine for automatic driving systems executes control related to the automatic driving of the vehicle. The virtual machine for surrounding monitoring systems executes control related to monitoring surroundings of the vehicle. The virtual machine for operation systems executes control related to traveling of the vehicle (e.g., traveling, turning, and stopping). The virtual machine for body systems executes control related to equipment of the vehicle (e.g., opening and closing windows and driving wipers).

The operating state of the virtual machine includes multiple operating states each involving a different processor utilization rate. For example "real time", "best effort", and "sleep" are preset as the multiple operating states. The "real time" refers to an operating state in which the virtual machine has to execute a specific process in a certain calculation period. The "best effort" refers to an operating state in which the virtual machine executes a process that does not require a strict calculation period and calculation time as compared to the state "real time". The "sleep" refers to an operating state in which the virtual machine is not required to perform calculation.

As shown in Fig. 5, in the vehicle state "1", the driving mode is the "automatic driving mode", but the ignition position is "OFF", which means that the vehicle is stopped. Thus, the operating state of the virtual machine for automatic driving systems is set to "sleep".

Since the automatic driving mode is assumed to be only "ON" or "OFF", the virtual machine for automatic driving systems is assumed to have either one of the two operating states "sleep" and "real time". It should be noted that the table shown in Fig. 5 is merely exemplary; alternatively, for example, different operating states may be set when required processor capacity differs, even with the use of the same virtual machine for automatic driving systems, between the case of performing the automatic driving in parking lots and the case of performing the automatic driving on general roads.

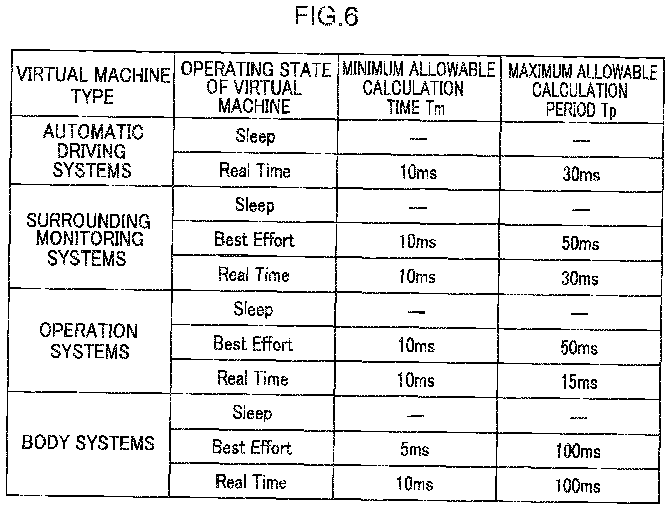

The management information storage section 40 also stores calculation time information as shown in Fig. 6. In the calculation time information, information representing a type of the virtual machine, the operating state, minimum allowable calculation time, and a maximum allowable calculation period are associated with each other as shown in Fig. 6.

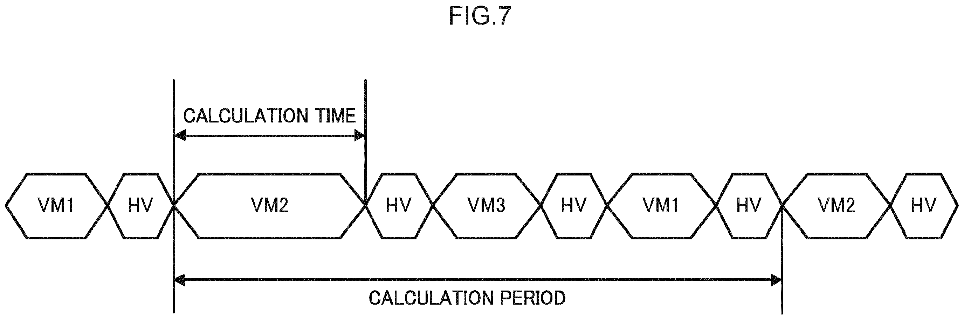

Fig. 7 explains the calculation time and the calculation period. Fig. 7 shows how multiple virtual machines run on a single processor. In the figure, "VM" denotes the virtual machine and "HV" denotes the hypervisor.

As shown in Fig. 7, the calculation period refers to a certain repeated period of time in which a specific virtual machine(s) runs. As shown in Fig. 7, the calculation time refers to time between the time at which a specific virtual machine starts running and the time at which the specific virtual machine finishes running. As shown in Fig. 7, when multiple virtual machines run on a single processor, the hypervisor43 switches one virtual machine with another to run them on the single processor.

In this case, one calculation period includes the calculation time for each virtual machine and the time for switching the virtual machines by the hypervisor 43. The hypervisor 43 determines how much calculation time is to be allocated to each virtual machine and switches the running virtual machines.

Because each of the multiple virtual machines is required to execute a different processing content, they each require a different calculation period and calculation time. Thus, a maximum allowable calculation period that can be allowed for by each virtual machine is preset for each virtual machine. Also, a minimum allowable calculation time that can be allowed for by each virtual machine is preset for each virtual machine.

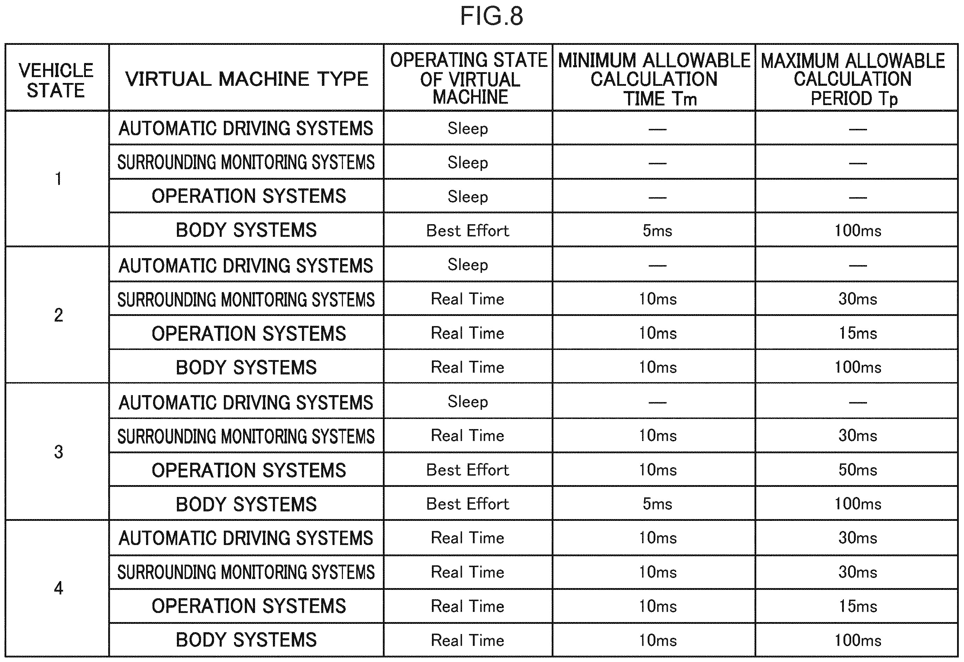

It should be noted that a table as shown in Fig. 8 may be generated by integrating the vehicle state information in Fig. 4, the operating state information in Fig. 5, and the calculation time information in Fig. 6.

The hypervisor 43 assigns each of the virtual machines 42 to any one of the multiple processors 18 based on the information obtained from the onboard sensor group 12 and the information stored in the management information storage section 40.

As shown in Fig. 2, the hypervisor 43 includes, as its functional components, an acquisition section 44, an identification section 46, a selection section 48, a changing section 50, a switching section 51, and a termination section 52.

The acquisition section 44 acquires a state of the vehicle. Specifically, the acquisition section 44 refers to the vehicle state information stored in the management information storage section 40 to acquire a state of the vehicle corresponding to the information outputted from the onboard sensor group 12. For example, when the information representing that an occupant is "present", the vehicle is "charged", the ignition position is "OFF", the shift position is "P", and the driving mode is "automatic driving mode" is outputted from the onboard sensor group 12, the acquisition section 44 of the hypervisor 43 refers to the vehicle state information shown in Fig. 4 to acquire the vehicle state "1". The state of the vehicle is thus identified.

The identification section 46 identifies a target virtual machine whose assignment is to be changed from one processor to another processor, based on the state of the vehicle acquired by the acquisition section 44. The one processor is an example of the first processor. Another processor is an example of the second processor. The identification section 46 identifies, as a target virtual machine, a virtual machine whose operating state is "best effort", which is an example of the specific operating state.

The selection section 48 selects another processor to which the target virtual machine is to be newly assigned, based on the state of the vehicle acquired by the acquisition section 44. The selection section 48 selects, as another processor, a processor on which a virtual machine with the operating state "real time", which is an example of the predetermined operating state, is already running. Note that each of the virtual machines has a predesignated processor to run on when it is in the operating state "real time".

The selection section 48 also selects, as a candidate for another processor in which virtual machines are to be consolidated, a processor of the multiple processors 18 that is different from a processor executing external communication processing or interrupt processing.

Based on the state of the vehicle acquired by the acquisition section 44, the changing section 50 changes processor assignment for the target virtual machine running on one processor such that the target virtual machine runs on another processor. The target virtual machine is the virtual machine identified by the identification section 46.

Specifically, the changing section 50 determines whether the target virtual machine can run on another processor selected by the selection section 48. When the target virtual machine can run on another processor, the changing section 50 changes processor assignment for the target virtual machine to cause the target virtual machine to run on another processor.

In the calculation time information stored in the management information storage section 40, the minimum allowable calculation time Tm and the maximum allowable calculation period Tp are predetermined for each operating state of each of the multiple virtual machines. Thus, the changing section 50 determines whether the target virtual machine can run on another processor selected by the selection section 48, according to the minimum allowable calculation time Tm and the maximum allowable calculation period Tp corresponding to the operating state of the target virtual machine.

Specifically, when each of the multiple virtual machines is assigned to any one of the multiple processors 18, the assignment of each virtual machine to each processor is made so as to satisfy the following restrictive conditions.

(1) Processors to which the respective virtual machines are to be assigned when all of them are in the operating state "real time" are predetermined at the design stage;
(2) For a virtual machine running in the operating state "real time" both before and after a vehicle state change, no change is made to processor assignment for the virtual machine;
(3) A virtual machine in the operating state "sleep" is not assigned to any processor;
(4) No virtual machine is assigned to a processor of the multiple processors that executes external communication or interrupt processing.
(5) Multiple virtual machines are consolidated in a processor to reduce the number of running processors.

When n virtual machines VM1, VM2, VM3, ... VMn are assigned to one processor to run on that processor, the changing section 50 identifies a minimum calculation period Tp,min that represents the smallest maximum allowable calculation period among the maximum allowable calculation periods of the n virtual machines. The changing section 50 then determines whether the n virtual machines can be switched within the minimum calculation period Tp,min.

For each of the multiple processors, the switching section 51 switches the virtual machines running thereon. Each of the multiple processors runs while switching the virtual machines thereon. For the hypervisor 43 to switch the n virtual machines within the minimum calculation period Tp,min, the switching section 51 of the hypervisor 43 also needs to operate n times. Therefore, if the following conditional expression is satisfied, where Thv is the calculation time required for the switching section 51 of the hypervisor 43 to switch the virtual machines, the n virtual machines can be assigned to one processor. Thus, the changing section 50 determines whether the following conditional expression (1) is satisfied, based on the minimum calculation period Tp,min, the switching calculation time Thv, and the minimum allowable calculation time Tm of each virtual machine. Note that x is an index for identifying each virtual machine, and n is the number of virtual machines.

[Expression 1]

$$\sum_{x=1}^{n} T_{m(x)} + n T_{hv} \leq T_{p,min}$$

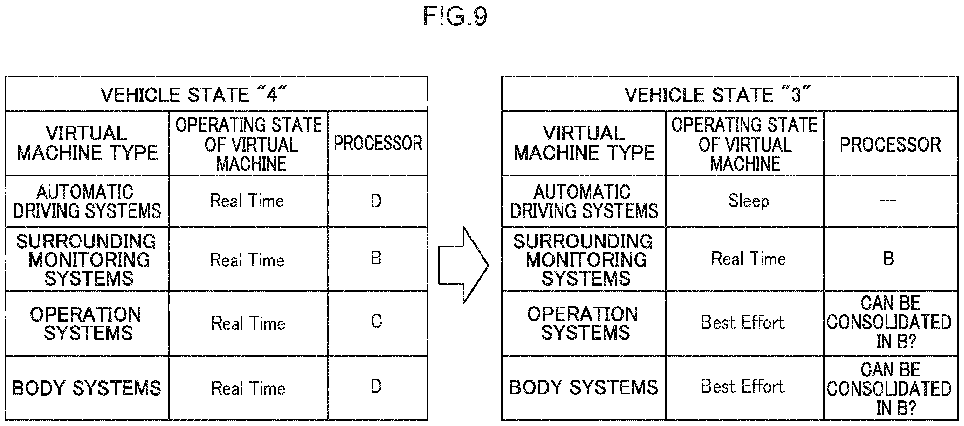

Fig. 9 shows an example in which the state of the vehicle changes from "4" to "3". As shown in Fig. 9, in the vehicle state "4", all of the virtual machines are in the operating state "real time". Thus, these virtual machines are respectively running on the predetermined processors B, C, and D. When the vehicle state changes from "4" to "3", the operating state of the virtual machine for automatic driving systems changes from "real time" to "sleep". Also, the operating state of the virtual machine for operation systems and the virtual machine for body systems changes from "real time" to "best effort".

In this case, in the vehicle state "3", only the virtual machine for surrounding monitoring systems continues to run in the operating state "real time". Thus, under the above restrictive condition (2), the virtual machine for surrounding monitoring systems needs to continue to run on the processor B.

Meanwhile, the virtual machine for operation systems and the virtual machine for body systems have changed their operating state from "real time" to "best effort". Thus, the virtual machine for operation systems and the virtual machine for body systems can be run on another processor.

Under the above restrictive condition (5), the changing section 50 determines whether the virtual machine for operation systems and the virtual machine for body systems can be consolidated in the processor B, which is another processor.

Below an example is given of how the changing section 50 determines whether the virtual machine for surrounding monitoring systems, the virtual machine for operation systems, and the virtual machine for body systems can be consolidated in a single processor when the vehicle state changes from "4" to "3".

Referring to the calculation time information shown in Fig. 6, the virtual machine for surrounding monitoring systems has the shortest maximum allowable calculation period Tp among the virtual machines. Thus, the maximum allowable calculation period of Tp = 30 ms corresponding to the virtual machine for surrounding monitoring systems is the minimum calculation period Tp,min. Accordingly, the right side of the above conditional expression (1) becomes as follows.

[Expression 2]

$$T_{p,min} = 30 \ ms$$

Meanwhile, since the three virtual machines of the virtual machine for surrounding monitoring systems, the virtual machine for operation systems, and the virtual machine for body systems are running, the hypervisor 43 performs switching three times. The switching time for the hypervisor 43 is assumed to be 1 ms. In this case, the left side of the above conditional expression (1) becomes as follows.

[Expression 3]

$$\sum_{x=1}^{n} T_{m(x)} + nT_{hv} = (10ms + 10ms + 5ms) + 3 \times 1ms = 28ms$$

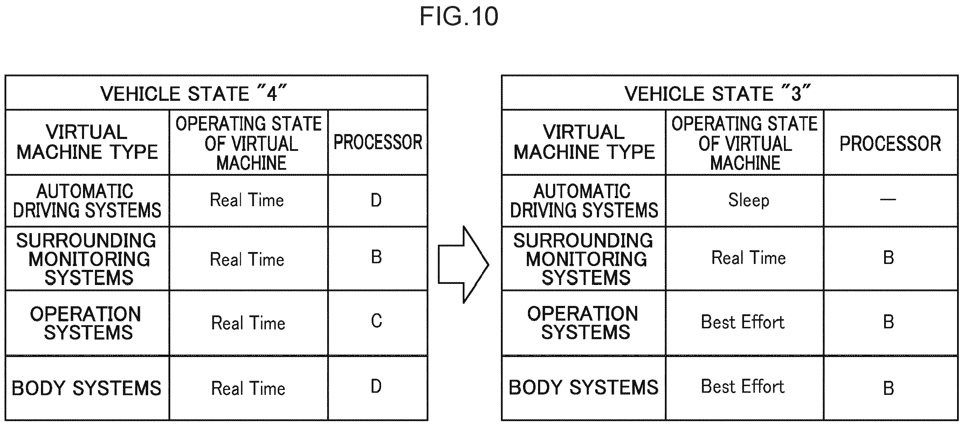

From the above, the conditional expression (1) is satisfied, and the three types of virtual machines can be all assigned to the processor B as shown in Fig. 10. When it is determined that the three virtual machines cannot be assigned to the processor B, the same calculation may be performed by sequentially reducing the number of virtual machines by one. Also, a virtual machine(s) that cannot be assigned to the processor B is assigned to still another processor.

Then, the changing section 50 stores, in the assignment information storage section 54, assignment information representing a combination of a target virtual machine and another processor that has been determined to be able to run the target virtual machine thereon.

The assignment information storage section 54 stores information representing which of the multiple virtual machines is assigned to which processor.

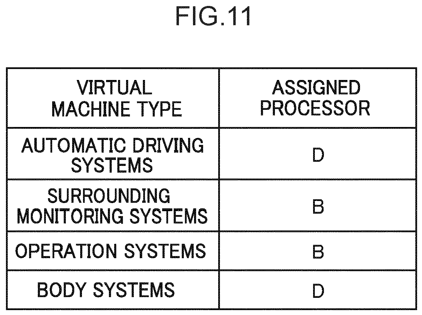

The assignment information storage section 54 stores assignment information as shown in Fig. 11. In the assignment information, each target virtual machine and a processor to be assigned to the target virtual machine are associated with each other as shown in Fig. 11.

When a target virtual machine can be run on another processor, the changing section 50 changes processor assignment for the target virtual machine to cause the target virtual machine to run on another processor. Specifically, the changing section 50 changes processor assignment for the target virtual machine by referring to the assignment information stored in the assignment information storage section 54.

The termination section 52 stops the one processor whose assignment to the virtual machine has been changed by the changing section 50.

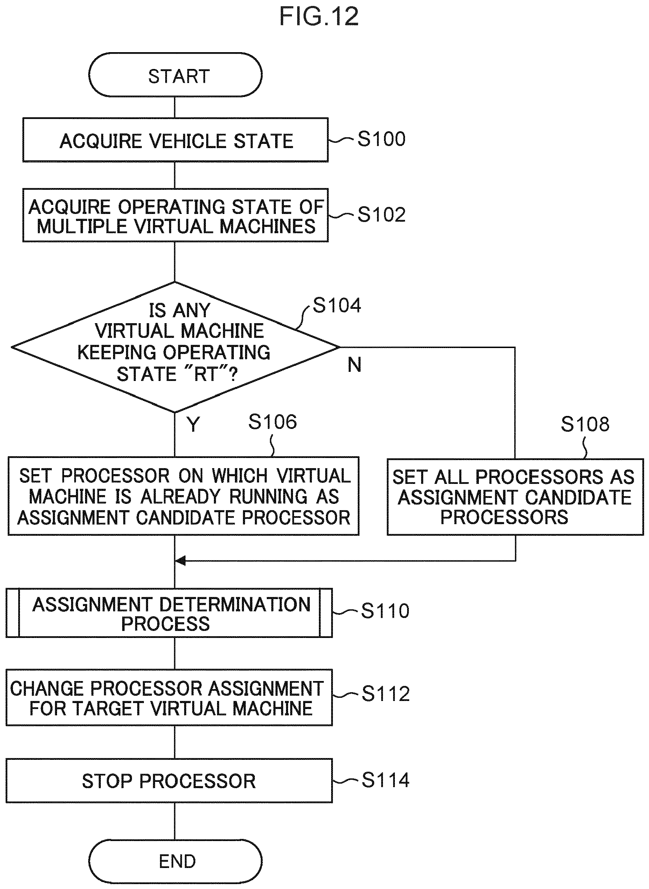

Now a description will be given of functions of the vehicle control system 10 of the exemplary embodiment. The ECU 16 of the vehicle control system 10 executes a vehicle control process routine shown in Fig. 12 every time the ECU 16 receives information outputted from the onboard sensor group 12.

At step S100, the acquisition section 44 of the hypervisor 43 of the ECU 16 acquires a state of the vehicle according to the information outputted from the onboard sensor group 12. Specifically, the acquisition section 44 refers to the vehicle state information stored in the management information storage section 40 to acquire a state of the vehicle corresponding to the information outputted from the onboard sensor group 12.

At step S102, the identification section 46 of the hypervisor 43 acquires an operating state of each of the multiple virtual machines 42 according to the state of the vehicle, based on the state of the vehicle acquired at step S100. Specifically, the identification section 46 of the hypervisor 43 refers to the virtual machine operating state information stored in the management information storage section 40 to acquire an operating state of each of the multiple virtual machines. For example, when the vehicle state acquired at step S100 is "1", the identification section 46 of the hypervisor 43 acquires the operating state "sleep" for the virtual machine for automatic driving systems, the operating state "sleep" for the virtual machine for surrounding monitoring systems, the operating state "sleep" for the virtual machine for operation systems, and the operating state "best effort" for the virtual machine for body systems.

At step S104, the identification section 46 of the hypervisor 43 determines whether there is a virtual machine that continues to be in the operating state "real time" (denoted as "RT" in the figure), based on the operating state of each of the virtual machines 42 acquired at step S102 and an operating state of each of the virtual machines before the new vehicle state is acquired. If there is a virtual machine that continues to be in the operating state "real time", the process goes to step S106. If there is no virtual machine that continues to be in the operating state "real time", the process goes to step S108.

At step S106, the selection section 48 of the hypervisor 43 identifies a processor on which the virtual machine in the operating state "real time" is running, based on the operating state of each of the virtual machines acquired at step S102. The selection section 48 of the hypervisor 43 then selects the processor on which the virtual machine in the operating state "real time" is running as a candidate processor for assignment of virtual machines.

Since the processor to which the virtual machine in the operating state "real time" is assigned continues to be at work, it is preferable to consolidate other virtual machines in this processor. This is because consolidating virtual machines allows to stop a processor to which virtual machines are no longer assigned. Thus, the selection section 48 of the hypervisor 43 sets the processor on which the virtual machine in the operating state "real time" is running as a candidate processor for assignment of virtual machines.

At step S108, the selection section 48 of the hypervisor 43 sets all processors as candidate processors for assignment of virtual machines.

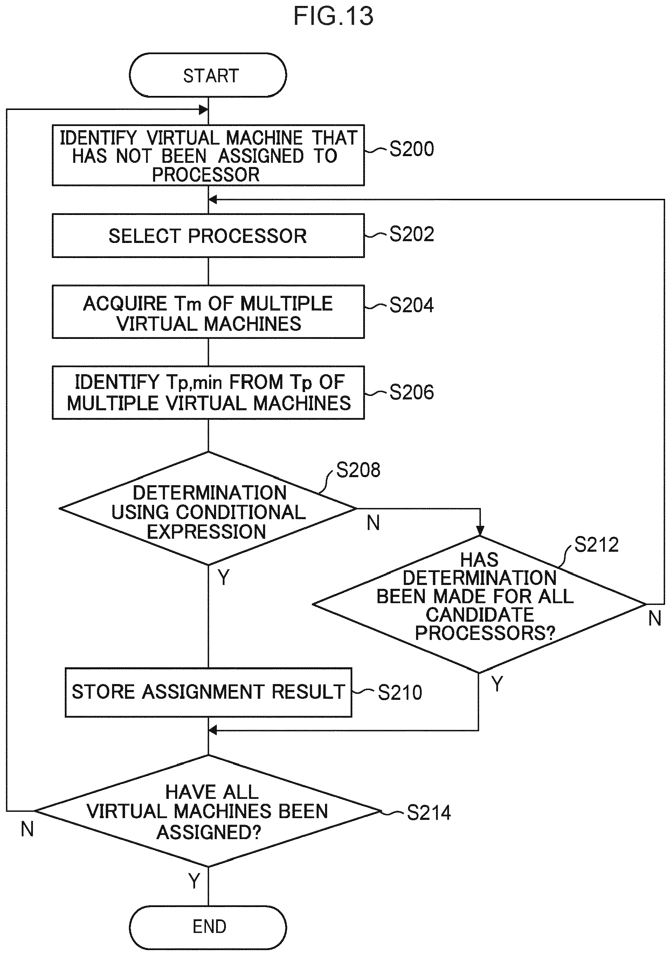

At step S110, the selection section 48 of the hypervisor 43 selects a processor to be assigned a target virtual machine, based on the state of the vehicle acquired at step S100. Step S110 is implemented by an assignment determination process routine shown in Fig. 13.

At step S200, the identification section 46 of the hypervisor 43 identifies multiple virtual machines for which an assigned processor has not been determined. Note that the virtual machines to be set here are those having an operating state other than "real time". Specifically, virtual machines in the operating state "best effort" are identified as target virtual machines for which an assigned processor is to be changed.

At step S202, the selection section 48 of the hypervisor 43 selects one processor from the multiple processors 18. The processor selected here is the one to which the virtual machine in the operating state "real time" has already been assigned.

At step S204, the changing section 50 of the hypervisor 43 refers to the calculation time information stored in the management information storage section 40 to acquire the minimum allowable calculation time Tm corresponding to the operating state of each of the target virtual machines, based on the operating state of each of the target virtual machines identified at step S200.

At step S206, the changing section 50 of the hypervisor 43 refers to the calculation time information stored in the management information storage section 40 to acquire the minimum calculation period Tp,min according to the maximum allowable calculation period Tp of each of the multiple virtual machines, based on the operating state of each of the target virtual machines identified at step S200.

At step S208, the changing section 50 of the hypervisor 43 determines whether the above conditional expression (1) is satisfied, based on the minimum allowable calculation time Tm of each of the multiple target virtual machines acquired at step S204 and the minimum calculation period Tp,min acquired at step S206. Note that Thv in the above conditional expression (1) represents calculation processing time required for the switching section 51 to switch the virtual machines.

At step S208, determination is made using the conditional expression (1), and if it is determined that the above conditional expression (1) is satisfied, the process goes to step S210. If it is not determined that the above conditional expression (1) is satisfied, the process goes to step S212.

At step S210, the selection section 48 of the hypervisor 43 stores, in the assignment information storage section 54, a combination of the target virtual machine and the assigned processor that has been determined to satisfy the conditional expression (1) at step S208.

At step S212, the selection section 48 of the hypervisor 43 determines whether the processing at steps S202-S208 has been executed for all assignment candidate processors. If the processing at steps S202-S208 has been executed for all assignment candidate processors, the process goes to step S214. If there is any assignment candidate processor for which the processing at steps S202-S208 has not been executed, the process returns to step S202 to set a new processor.

At step S214, the selection section 48 of the hypervisor 43 determines whether all target virtual machines have been determined as to which processor is to be assigned. If all target virtual machines have been determined as to which processor is to be assigned, the assignment process routine ends. If there is any target virtual machine for which an assigned processor has not been determined, the process goes to step S200 to execute processing to determine a processor to which that target virtual machine is to be assigned.

Now returning to step S112 in Fig. 12, the changing section 50 changes processor assignment for each target virtual machine such that the target virtual machine running on one processor runs on another processor, based on the assignment information stored in the assignment information storage section 54 at step S210.

At step S114, the termination section 52 stops a processor whose assignment has been changed at step S112 and to which no virtual machines are now assigned. The switching section 51 of the hypervisor 43 switches the virtual machines running on each processor based on the assignment information. Each of the multiple processors runs while switching the virtual machines thereon.

Thus, each of the virtual machines can be consolidated in a specific processor, and a processor to which virtual machines are no longer assigned can be terminated or suspended. This reduces power consumption while taking into account a state of the vehicle.

As described above, the ECU according to the exemplary embodiment changes, based on a state of the vehicle, processor assignment for a target virtual machine running on one processor to cause the target virtual machine to run on another processor, and stops the one processor whose assignment has been thus changed. This reduces power consumption while taking into account a state of the vehicle when multiple virtual machines are run on multiple processors installed in the vehicle. Additionally, the target virtual machine for which processor assignment is to be changed is identified according to the state of the vehicle, and this reduces impact of virtual machine migration between the processors on operation of the vehicle. Also, each processor can be assigned to each virtual machine so as to achieve an appropriate operating state according to the state of the vehicle.

Second Exemplary Embodiment

Now a description will be given of a second exemplary embodiment. The configuration of the vehicle control system according to the second exemplary embodiment is similar to that of the first exemplary embodiment, and accordingly similar elements are denoted by the respective same reference numerals and description thereof has been omitted.

The vehicle control system 10 according to the second exemplary embodiment differs from the first exemplary embodiment in the determination method used for changing processor assignment.

Below a description will be given of functions of the vehicle control system 10 of the second exemplary embodiment. Similarly to the first exemplary embodiment, the ECU 16 of the vehicle control system 10 of the second exemplary embodiment executes a vehicle control process routine shown in Fig. 12 every time the ECU 16 receives the information outputted from the onboard sensor group 12.

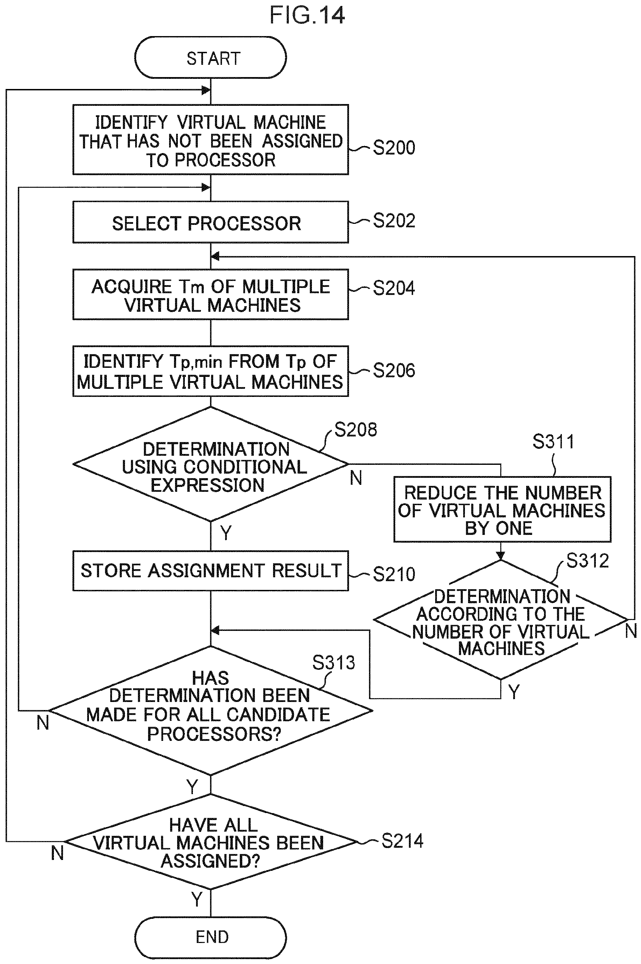

Similarly to the first exemplary embodiment, the vehicle control system 10 of the second exemplary embodiment executes steps S100-S114 in Fig. 12. Here, the assignment determination process at step S110 differs from that of the first exemplary embodiment. In the second exemplary embodiment, step S110 is implemented by an assignment determination process routine shown in Fig. 14.

Steps S200-S208 and S214 in the assignment determination process routine shown in Fig. 14 are the same as those in the first exemplary embodiment.

If, at step S208, it is not determined that the above conditional expression (1) is satisfied, the process goes to step S311.

At step S311, the changing section 50 of the second exemplary embodiment excludes one of the multiple virtual machines from target virtual machines for assignment and thereby reduces the number of virtual machines by one.

At step S312, the changing section 50 of the second exemplary embodiment executes a determination process according to the number of target virtual machines for assignment, and determines whether the number of target virtual machines for assignment has become zero. If the number of target virtual machines for assignment has become zero, the process goes to step S313. If the number of target virtual machines for assignment has not become zero, the process returns to step S204 to determine whether assignment change can be made for the rest of the virtual machines.

At step S313, the changing section 50 of the second exemplary embodiment determines whether the process of steps S204-S312 has been executed for all assignment candidate processors. If the process of steps S204-S312 has been executed for all assignment candidate processors, the process goes to step S214. If there is any assignment candidate processor for which the process of steps S204-S312 has not been executed, the process returns to step S202 to set a new processor.

In the first exemplary embodiment, the processor to which multiple virtual machines can be assigned is identified while sequentially changing assignment candidate processors. In the second exemplary embodiment, on the other hand, if it is determined that multiple virtual machines cannot be assigned to one processor, one of the multiple virtual machines is excluded and it is again determined whether the virtual machines can be assigned to that processor. This reduces power consumption while effectively utilizing computational resources of the processor.

It should be noted that while the processing performed by each device in the above exemplary embodiments has been described as software processing that is implemented by a computer executing a program, the processing may be implemented in hardware. Alternatively, the processing may be implemented in a combination of software and hardware. Also, the program stored in the ROM may be stored in various types of storage media and distributed.

It will be apparent that the present disclosure is not limited to the above exemplary embodiments and may be modified in various ways without departing from the scope of the present disclosure.

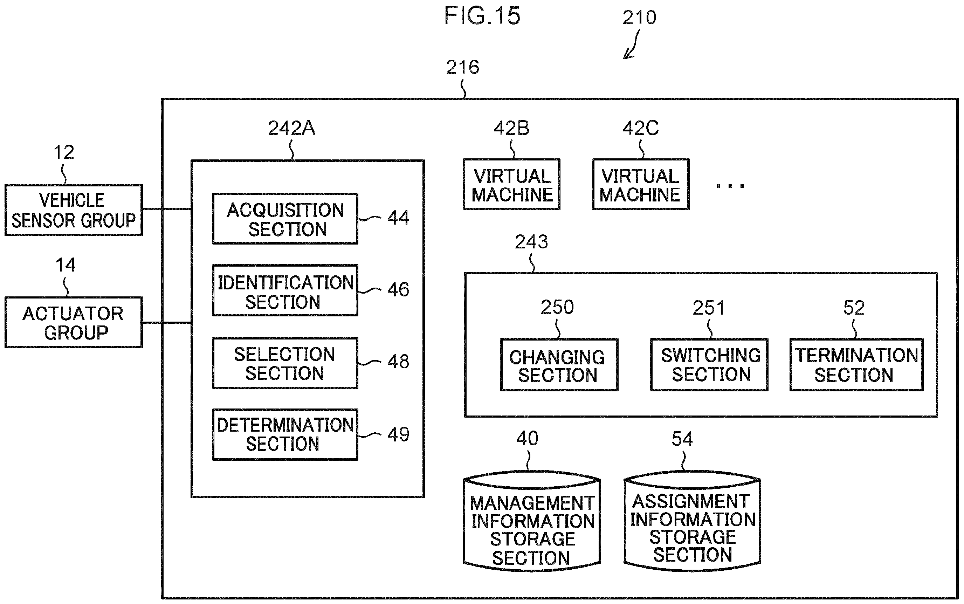

For example, while in the above exemplary embodiments the hypervisor 43 determines whether a target virtual machine running on one processor runs on another processor based on a state of the vehicle, this is by way of example only and not of limitation. Alternatively, use may be made of a vehicle control system 210 as shown in Fig. 15. In the vehicle control system 210 shown in Fig. 15, a virtual machine 242A determines whether a target virtual machine running on one processor runs on another processor based on a state of the vehicle, and stores the assignment information, which represents a combination of a target virtual machine and a processor, in the assignment information storage section 54. A changing section 250 of a hypervisor 243 refers to the assignment information stored in the assignment information storage section 54 and controls multiple virtual machines such that the target virtual machine running on the one processor runs on another processor. Also, for each of the multiple processors, a switching section 251 of the hypervisor 243 switches virtual machines running thereon.

The acquisition section 44 in the hypervisor 43 of the above exemplary embodiments may be external to the ECU 16 and, for example, may be provided in any one of the onboard sensor group 12.

The disclosures of Japanese Patent Application No. 2020-17283 filed on February 4, 2020 are incorporated herein by reference in their entirety.

All publications, patent applications, and technical standards mentioned in this specification are herein incorporated by reference to the same extent as if each individual publication, patent application, or technical standard was specifically and individually indicated to be incorporated by reference.

**Claims**

1. Avehicle control device(16) comprising:

   a memory(20); and
   a plurality of processors(18A,18B,18C) coupled to the memory(20) and configured to run a plurality of virtual machines(42A,42B,42C) configured to control a vehicle, wherein one of the plurality of processors(18A,18B, 18C) is configured to:

      acquire(44) a state of the vehicle;
      based on the state of the vehicle, change(50) processor assignment for a target virtual machine running on a first processor to cause the target virtual machine to run on a second processor; and
      stop(52) the first processor for which assignment has been changed.

2. The vehicle control device(16) of claim 1, wherein the one of the plurality of processors(18A,18B,18C) is configured to:

      identify(46) the target virtual machine for which assignment is to be changed from the first processor to the second processor, based on the state of the vehicle; and
      change(50) processor assignment for the identified target virtual machine.

3. The vehicle control device(16) of claim 2, wherein the one of the plurality of processors(18A,18B,18C) is configured to identify(46) the target virtual machine based on the state of the vehicle and operating state information, the operating state information including a predetermined correspondence between a state of the vehicle and an operating state of a virtual machine.

4. The vehicle control device(16) of claim 3, wherein the operating state of the virtual machine comprises a plurality of operating states each involving a different processor utilization rate.

5. The vehicle control device(16) of claim 4, wherein the one of the plurality of processors(18A,18B,18C) is configured to identify(46), as the target virtual machine, a virtual machine in a specific operating state among the plurality of operating states.

6. The vehicle control device(16) of any one of claim 2 to claim 5, wherein the one of the plurality of processors(18A, 18B, 18C) is configured to select(48) the second processor based on the state of the vehicle.

7. The vehicle control device(16) of claim 6, wherein the one of the plurality of processors(18A,18B,18C) is configured to determine whether it is possible to run the target virtual machine on the selected second processor, and in a case in which it is possible to run the target virtual machine on the second processor, the one of the plurality of processors(18A,18B,18C) is configured to change(50) processor assignment for the target virtual machine to cause the target virtual machine to run on the second processor.

8. The vehicle control device(16) of claim 6 or claim7, wherein the one of the plurality of processors(18A,18B,18C) is configured to select(48), as the second processor, a processor on which a virtual machine in a predetermined operating state is already running.

9. The vehicle control device(16) of claim 8, wherein each of the plurality of virtual machines(42A,42B,42C) has a predesignated processor to run on while in the predetermined operating state.

10. The vehicle control device(16) of any one of claim 6 to claim 9, wherein the one of the plurality of processors(18A, 18B,18C) is configured to select, as the second processor, a processor that is different from a processor configured to execute external communication processing or interrupt processing.

11. The vehicle control device(16) of any one of claim 6 to claim 10, wherein:

each of the plurality of virtual machines(42A,42B,42C) has a maximum allowable calculation period and minimum allowable calculation time that are predetermined for each operating state, the maximum allowable calculation period representing a maximum calculation period allowed for by each virtual machine, the minimum allowable calculation time representing minimum calculation time allowed for by each virtual machine, and
the one of the plurality of processors(18A,18B,18C) is configured to determine whether it is possible to run the target virtual machine on the selected second processor, according to at least one of the maximum allowable calculation period and the minimum allowable calculation time corresponding to an operating state of the target virtual machine, and in a case in which it is possible to run the target virtual machine on the second processor, the one of the plurality of processors(18A,18B,18C) is configured to change(50) processor assignment for the target virtual machine to cause the target virtual machine to run on the second processor.

12. The vehicle control device(16) of any one of claim 1 to claim 11, wherein the state of the vehicle is determined based on at least one of presence of an occupant, absence of an occupant, charging of the vehicle, an ignition position, a shift position, and a driving mode.

13. A vehicle control method executed by a vehicle control device including a memory(20) and a plurality of processors(18A,18B,18C) coupled to the memory(20) and configured to run a plurality of virtual machines(42A,42B,42C) configured to control a vehicle, the method comprising:

acquiring(44), by one of the plurality of processors(18A,18B,18C), a state of the vehicle;
based on the acquired state of the vehicle, changing(50), by one of the plurality of processors(18A,18B,18C), processor assignment for a target virtual machine running on a first processor to cause the target virtual machine to run on a second processor; and
stopping(52), by one of the plurality of processors(18A, 18B, 18C), the first processor for which assignment has been changed.

14. A non-transitory computer-readable storage medium storing a vehicle control program executable by a computer of a vehicle control device including a memory(20) and a plurality of processors(18A,18B,18C) coupled to the memory(20) and configured to run a plurality of virtual machines(42A,42B,42C) configured to control a vehicle, the program, when executed by the computer, causing the computer to perform a method comprising:

acquiring(44), by one of the plurality of processors(18A,18B,18C), a state of the vehicle;
based on the acquired state of the vehicle, changing(50), by one of the plurality of processors(18A,18B,18C), processor assignment for a target virtual machine running on a first processor to cause the target virtual machine to run on a second processor; and
stopping(52), by one of the plurality of processors(18A, 18B, 18C), the first processor for which assignment has been changed.

# FIG.1

EP 3 862 878 A1

EP 3 862 878 A1

## FIG.2

10

16

12
VEHICLE SENSOR GROUP

14
ACTUATOR GROUP

43

ACQUISITION SECTION — 44

IDENTIFICATION SECTION — 46

SELECTION SECTION — 48

CHANGING SECTION — 50

SWITCHING SECTION — 51

TERMINATION SECTION — 52

42A
VIRTUAL MACHINE

42B
VIRTUAL MACHINE

42C
VIRTUAL MACHINE

. . .

40
MANAGEMENT INFORMATION STORAGE SECTION

54
ASSIGNMENT INFORMATION STORAGE SECTION

FIG.3

FIG.4

| VEHICLE STATE | OCCUPANT | CHARGING STATE | IGNITION POSITION | SHIFT POSITION | DRIVING MODE |
|---|---|---|---|---|---|
| 1 | PRESENT | CHARGED | OFF | P | AUTOMATIC DRIVING MODE |
| 2 | PRESENT | CHARGED | ON | D | MANUAL DRIVING MODE |
| 3 | ABSENT | BATTERY ONLY | ON | P | MANUAL DRIVING MODE |
| 4 | PRESENT | BATTERY ONLY | ON | D | AUTOMATIC DRIVING MODE |

# FIG.5

| VIRTUAL MACHINE TYPE | VEHICLE STATE | OPERATING STATE OF VIRTUAL MACHINE |
|---|---|---|
| AUTOMATIC DRIVING SYSTEMS | 1 | Sleep |
| | 2 | Sleep |
| | 3 | Sleep |
| | 4 | Real Time |
| SURROUNDING MONITORING SYSTEMS | 1 | Sleep |
| | 2 | Real Time |
| | 3 | Real Time |
| | 4 | Real Time |
| OPERATION SYSTEMS | 1 | Sleep |
| | 2 | Real Time |
| | 3 | Best Effort |
| | 4 | Real Time |
| BODY SYSTEMS | 1 | Best Effort |
| | 2 | Real Time |
| | 3 | Best Effort |
| | 4 | Real Time |

# FIG.6

| VIRTUAL MACHINE TYPE | OPERATING STATE OF VIRTUAL MACHINE | MINIMUM ALLOWABLE CALCULATION TIME Tm | MAXIMUM ALLOWABLE CALCULATION PERIOD Tp |
|---|---|---|---|
| AUTOMATIC DRIVING SYSTEMS | Sleep | — | — |
| | Real Time | 10ms | 30ms |
| SURROUNDING MONITORING SYSTEMS | Sleep | — | — |
| | Best Effort | 10ms | 50ms |
| | Real Time | 10ms | 30ms |
| OPERATION SYSTEMS | Sleep | — | — |
| | Best Effort | 10ms | 50ms |
| | Real Time | 10ms | 15ms |
| BODY SYSTEMS | Sleep | — | — |
| | Best Effort | 5ms | 100ms |
| | Real Time | 10ms | 100ms |

## FIG.7

FIG.8

| VEHICLE STATE | VIRTUAL MACHINE TYPE | OPERATING STATE OF VIRTUAL MACHINE | MINIMUM ALLOWABLE CALCULATION TIME Tm | MAXIMUM ALLOWABLE CALCULATION PERIOD Tp |
|---|---|---|---|---|
| 1 | AUTOMATIC DRIVING SYSTEMS | Sleep | — | — |
| | SURROUNDING MONITORING SYSTEMS | Sleep | — | — |
| | OPERATION SYSTEMS | Sleep | — | — |
| | BODY SYSTEMS | Best Effort | 5ms | 100ms |
| 2 | AUTOMATIC DRIVING SYSTEMS | Sleep | — | — |
| | SURROUNDING MONITORING SYSTEMS | Real Time | 10ms | 30ms |
| | OPERATION SYSTEMS | Real Time | 10ms | 15ms |
| | BODY SYSTEMS | Real Time | 10ms | 100ms |
| 3 | AUTOMATIC DRIVING SYSTEMS | Sleep | — | — |
| | SURROUNDING MONITORING SYSTEMS | Real Time | 10ms | 30ms |
| | OPERATION SYSTEMS | Best Effort | 10ms | 50ms |
| | BODY SYSTEMS | Best Effort | 5ms | 100ms |
| 4 | AUTOMATIC DRIVING SYSTEMS | Real Time | 10ms | 30ms |
| | SURROUNDING MONITORING SYSTEMS | Real Time | 10ms | 30ms |
| | OPERATION SYSTEMS | Real Time | 10ms | 15ms |
| | BODY SYSTEMS | Real Time | 10ms | 100ms |

# FIG.9

| VEHICLE STATE "4" | | |
|---|---|---|
| VIRTUAL MACHINE TYPE | OPERATING STATE OF VIRTUAL MACHINE | PROCESSOR |
| AUTOMATIC DRIVING SYSTEMS | Real Time | D |
| SURROUNDING MONITORING SYSTEMS | Real Time | B |
| OPERATION SYSTEMS | Real Time | C |
| BODY SYSTEMS | Real Time | D |

⇨

| VEHICLE STATE "3" | | |
|---|---|---|
| VIRTUAL MACHINE TYPE | OPERATING STATE OF VIRTUAL MACHINE | PROCESSOR |
| AUTOMATIC DRIVING SYSTEMS | Sleep | — |
| SURROUNDING MONITORING SYSTEMS | Real Time | B |
| OPERATION SYSTEMS | Best Effort | CAN BE CONSOLIDATED IN B? |
| BODY SYSTEMS | Best Effort | CAN BE CONSOLIDATED IN B? |

EP 3 862 878 A1

## FIG.10

**VEHICLE STATE "4"**

| VIRTUAL MACHINE TYPE | OPERATING STATE OF VIRTUAL MACHINE | PROCESSOR |
|---|---|---|
| AUTOMATIC DRIVING SYSTEMS | Real Time | D |
| SURROUNDING MONITORING SYSTEMS | Real Time | B |
| OPERATION SYSTEMS | Real Time | C |
| BODY SYSTEMS | Real Time | D |

⇨

**VEHICLE STATE "3"**

| VIRTUAL MACHINE TYPE | OPERATING STATE OF VIRTUAL MACHINE | PROCESSOR |
|---|---|---|
| AUTOMATIC DRIVING SYSTEMS | Sleep | — |
| SURROUNDING MONITORING SYSTEMS | Real Time | B |
| OPERATION SYSTEMS | Best Effort | B |
| BODY SYSTEMS | Best Effort | B |

23

## FIG.11

| VIRTUAL MACHINE TYPE | ASSIGNED PROCESSOR |
|---|---|
| AUTOMATIC DRIVING SYSTEMS | D |
| SURROUNDING MONITORING SYSTEMS | B |
| OPERATION SYSTEMS | B |
| BODY SYSTEMS | D |

# FIG.12

START

ACQUIRE VEHICLE STATE — S100

ACQUIRE OPERATING STATE OF MULTIPLE VIRTUAL MACHINES — S102

IS ANY VIRTUAL MACHINE KEEPING OPERATING STATE "RT"? — S104

N

Y — S106

S108

SET PROCESSOR ON WHICH VIRTUAL MACHINE IS ALREADY RUNNING AS ASSIGNMENT CANDIDATE PROCESSOR

SET ALL PROCESSORS AS ASSIGNMENT CANDIDATE PROCESSORS

ASSIGNMENT DETERMINATION PROCESS — S110

CHANGE PROCESSOR ASSIGNMENT FOR TARGET VIRTUAL MACHINE — S112

STOP PROCESSOR — S114

END

# FIG.13

START

IDENTIFY VIRTUAL MACHINE THAT HAS NOT BEEN ASSIGNED TO PROCESSOR — S200

SELECT PROCESSOR — S202

ACQUIRE Tm OF MULTIPLE VIRTUAL MACHINES — S204

IDENTIFY Tp,min FROM Tp OF MULTIPLE VIRTUAL MACHINES — S206

S208
DETERMINATION USING CONDITIONAL EXPRESSION

N

S212
HAS DETERMINATION BEEN MADE FOR ALL CANDIDATE PROCESSORS?

N

Y

Y

STORE ASSIGNMENT RESULT — S210

HAVE ALL VIRTUAL MACHINES BEEN ASSIGNED? — S214

N

Y

END

# FIG.14

START

IDENTIFY VIRTUAL MACHINE THAT HAS NOT BEEN ASSIGNED TO PROCESSOR — S200

SELECT PROCESSOR — S202

ACQUIRE Tm OF MULTIPLE VIRTUAL MACHINES — S204

IDENTIFY Tp,min FROM Tp OF MULTIPLE VIRTUAL MACHINES — S206

DETERMINATION USING CONDITIONAL EXPRESSION — S208

N

REDUCE THE NUMBER OF VIRTUAL MACHINES BY ONE — S311

Y

STORE ASSIGNMENT RESULT — S210

DETERMINATION ACCORDING TO THE NUMBER OF VIRTUAL MACHINES — S312

N

Y

HAS DETERMINATION BEEN MADE FOR ALL CANDIDATE PROCESSORS? — S313

N

Y

HAVE ALL VIRTUAL MACHINES BEEN ASSIGNED? — S214

N

Y

END

# FIG.15

VEHICLE SENSOR GROUP — 12

ACTUATOR GROUP — 14

210

216

242A

ACQUISITION SECTION — 44

IDENTIFICATION SECTION — 46

SELECTION SECTION — 48

DETERMINATION SECTION — 49

42B

VIRTUAL MACHINE

42C

VIRTUAL MACHINE

· · ·

243

250 — CHANGING SECTION

251 — SWITCHING SECTION

52 — TERMINATION SECTION

40 — MANAGEMENT INFORMATION STORAGE SECTION

54 — ASSIGNMENT INFORMATION STORAGE SECTION

EP 3 862 878 A1

Europäisches
Patentamt

European
Patent Office

Office européen
des brevets

# EUROPEAN SEARCH REPORT

Application Number

EP 21 15 3147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2019 179397 A (DENSO CORP) 17 October 2019 (2019-10-17) * figures 1-6 * * paragraph [0015] - paragraph [0034] * | 1-14 | INV. G06F9/455 |
| A | JP 2012 185541 A (DENSO CORP) 27 September 2012 (2012-09-27) * paragraph [0009] * * paragraph [0024] - paragraph [0030] * | 1-14 | |
| A | ALEJANDRO MASRUR ET AL: "Designing VM schedulers for embedded real-time applications", HARDWARE/SOFTWARE CODESIGN AND SYSTEM SYNTHESIS (CODES+ISSS), 2011 PROCEEDINGS OF THE 9TH INTERNATIONAL CONFERENCE ON, IEEE, 2 PENN PLAZA, SUITE 701 NEW YORK NY 10121-0701 USA, 9 October 2011 (2011-10-09), pages 29-38, XP058005103, DOI: 10.1145/2039370.2039378 ISBN: 978-1-4503-0715-4 * abstract * * page 29, right-hand column, line 1 - page 30, right-hand column, line 16 * * page 31, left-hand column, line 36 - page 33, left-hand column, line 24 * | 1-14 | TECHNICAL FIELDS SEARCHED (IPC) G06F |

The present search report has been drawn up for all claims

| Place of search | Date of completion of the search | Examiner |
|---|---|---|
| Munich | 15 June 2021 | Eigner, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 3147

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2021

| Patent document cited in search report | Publication date | Patent family member(s) | Publication date |
|---|---|---|---|
| JP 2019179397 A | 17-10-2019 | NONE | |
| JP 2012185541 A | 27-09-2012 | NONE | |

EPO FORM P0459

For more details about this annex : see Official Journal of the European Patent Office, No. 12/82

**EP 3 862 878 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019057162 A
- WO 2011119444 A
- JP 2020017283 A